# FASCICULE DE BREVET EUROPEEN

(11) **EP 0 970 263 B1**
(45) Date de publication et mention de la délivrance du brevet: **19.02.2003**
(21) Numéro de dépôt: 98917210.1
(22) Date de dépôt: 23.03.1998
(51) Int. Cl.: C25C 1/20, C25B 1/00, G21F 9/06

(54) **PROCEDE ELECTROLYTIQUE DE RECUPERATION ET DE RECYCLAGE DE L'ARGENT A PARTIR D'UNE SOLUTION NITRIQUE**
ELEKTROCHEMISCHES VERFAHREN ZUR RÜCKGEWINNUNG UND WIEDERVERWERTUNG VON SILBER AUS EINER WÄSSRIGEN SALPETERSÄURE-LÖSUNG
ELECTROLYTIC METHOD FOR RECOVERING AND RECYCLING SILVER FROM A NITRIC SOLUTION

(30) Priorité: 24.03.1997 FR 9703552
(43) Date de publication de la demande: 12.01.2000
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: BOURGES, Jacques, F-91370 Verrières-le-Buisson (FR); BROUDIC, Jean-Charles, F-30400 Villeneuve-lès-Avignon (FR); DAUBY, Jacques, F-84850 Camaret sur Aigues (FR); LEBOUCHER, Isabelle, F-78000 Versailles (FR); LECLERC, Olivier, F-77250 Moret sur Loing (FR); BATICLE, Pascal, F-77140 Nonville (FR)
(74) Mandataire: Audier, Philippe André
(86) Numéro de dépôt international: FR9800580
(87) Numéro de publication internationale: WO98042894

(56) Documents cités:
- FR-A- 2 667 080
- PATENT ABSTRACTS OF JAPAN vol. 017, no. 609 (P-1640), 9 novembre 1993 & JP 05 188187 A (POWER REACTOR & NUCLEAR FUEL DEV CORP), 30 juillet 1993, cité dans la demande

## Description

La présente invention a trait à un procédé électrolytique de récupération sélective et de recyclage de l'argent à partir d'une solution nitrique contenant l'argent sous forme Ag(I), ce procédé comprenant des étapes successives d'électrodéposition et de resolubilisation de l'argent Ag(O) déposé.

L'invention s'applique notamment à la récupération sélective de l'Ag(I) par réduction en Ag métal à partir des solutions nitriques issues du traitement des déchets plutonifères dans les usines de retraitement des combustibles nucléaires et à la resolubilisation de l'argent métal en Ag(I) en vue de son recyclage en amont du procédé.

Il est connu depuis longtemps d'utiliser un procédé électrolytique pour récupérer l'argent métallique à partir de solutions ou d'effluents contenant notamment des ions Argent.

Ainsi, le document FR-A-0 704 663 décrit-il un procédé de séparation de l'argent à l'état métallique par électrolyse, à partir de solutions d'hyposulfite contenant des ions Argent, Ag(I), utilisées en particulier en photographie.

Ce procédé consiste à ajouter à la solution à traiter, outre de la gélatine, un agent activant spécifique contenant du soufre destiné à fournir pendant l'électrolyse de très faibles dépôts cathodiques de sulfure d'argent. Ce document ne concerne que le problème extrêmement spécifique de l'électrolyse de l'argent à partir de bains d'hyposulfite et ne contient aucun enseignement pouvant s'appliquer à l'électrolyse des solutions nitriques ; d'autre part, la resolubilisation de l'argent déposé n'est absolument pas évoquée.

Le document US-A-4 226 685 est relatif à un procédé pour éliminer les métaux lourds tels que l'argent et les ions cyanures d'effluents de plaquage électrolytique qui met en oeuvre un appareil d'électrolyse à enceinte unique, sans compartiment séparé, comprenant des cathodes de grande surface spécifique formées d'un lit de particules conductrices. Le traitement spécifique d'effluents nitriques, de même que la resolubilisation éventuelle du métal, par exemple de l'argent déposé, n'est absolument pas évoqué, il est seulement mentionné que les cathodes sur lesquelles se trouvent les métaux sont démontées, enlevées de l'appareil, et traitées ultérieurement par des techniques classiques de purification.

De manière analogue, le document FR-A-0 449 735 concerne un réacteur de "dépollution" électrolytique pour le traitement d'effluents aqueux contenant des métaux lourds comprenant une cuve unique dans laquelle sont placées de manière alternée, des électrodes de polarité opposée, les cathodes étant de préférence réalisées sous la forme d'électrodes volumiques amovibles à remplissage granulaire, par exemple à base de coke de pétrole.

De nouveau, le traitement de solutions nitriques notamment de l'argent n'est pas abordé, la récupération du métal déposé se fait en retirant la cathode amovible et en traitant de manière classique le lit granulaire hors de la cuve pour récupérer le métal.

Le problème de la récupération et du recyclage de l'argent à partir de solutions nitriques se pose notamment avec une particulière acuité, dans les installations de retraitement de combustible nucléaire.

Dans ces installations, on utilise en effet l'aptitude remarquable que possède l'espèce Ag(II) à solubiliser "quasi-instantanément" le bioxyde de plutonium en milieu nitrique, telle qu'elle est décrite en particulier dans les documents de J. BOURGES, C. MADIC, G. KOEHLY, M. LECOMTE "Dissolution du bioxyde de plutonium en milieu nitrique par l'Ag(II) électrogénéré" J. of the Less Common Metals, p. 122, 303, 1968 et le document de M. LECOMTE, J. BOURGES, C. MADIC "Applications du procédé de dissolution oxydante du bioxyde de plutonium" In Proceedings of the In. Conf. on Nucl. Fuel Reprocessing and Waste Management RECOD 87, Vol. 1, p. 444, 1987.

L'usage du couple rédox Ag(II)/Ag(I) s'est de ce fait imposé progressivement depuis quelques années, dans les usines de retraitement telles que celle de La Hague, comme cela est mentionné dans le document de F.J. PONCELET, M.H. MOULINEY, V. DECOBERT, M. LECOMTE "Industrial Use of Electrogenerated Ag(II) for PuO₂ Dissolution RECOD 94 Proceedings", Vol. II, p. 24-28 Avril 1994, Londres - Royaume Uni.

En particulier, la technique de dissolution "oxydante" du PuO₂ à l'Ag(II) électrogénéré à partir de sels d'argent et notamment de AgNO₃, doit être mise en oeuvre pour le traitement de certains déchets plutonifères comme l'indique le document de J. BOURGES, M. LECOMTE, J.C. BROUDIC, M. MASSON, D. LALUQUE, J.P. LECOURT "Décontamination des déchets solides contaminés en émetteurs alpha, beta, gamma, en vue de leur déclassement en terme de stockage" EUR 15 804 FR, 1994 et le document de M.H. MOULINEY, F.J. PONCELET, P. MIQUEL, V. DECOBERT, M. LECOMTE "Electrogenerated Ag(II) for Recovery of PuO₂ from Waste" ENC 94, 286 Octobre 1994, Lyon, France.

Toutefois, cette introduction d'argent sous forme d'AgNO₃ dans l'aval du cycle, n'est pas sans poser de nombreux problèmes de traitement pour les effluents induits qui sont dirigés, en fin de cycle, vers la vitrification.

Des contraintes de coût, d'une part, et des contraintes liées à la qualité des déchets vitrifiés, d'autre part imposent de limiter la quantité d'argent introduite dans les verres.

Il est donc nécessaire de récupérer l'argent se trouvant sous forme Ag(I) dans les solutions nitriques concentrées issues du retraitement.

Parmi les procédés de récupération de l'argent à partir des solutions nitriques contaminées en émetteurs alpha, on connaît d'une part un procédé de réduction et de précipitation de l'Ag(I) en Ag(0) par l'acide ascorbique avec le plus souvent, addition de réactifs anti-nitreux : hydrazine, nitrate d'hydroxylamine et d'autre part un procédé de réduction de l'Ag(I) en Ag(0) réalisé dans un électrolyseur à compartiment séparé.

Ces procédés sont décrits respectivement dans les documents de E.J. WHEELWRIGHT, L.A. BRAY, J.L. RYAN "Apparatus and Methods for Dissolving Hazardous Waste Materials by Catalized Electrochemical Dissolution" WO-A-89/10981, Novembre 1989 et de D. BLANCHARD, J.E. SUMMA, D.L. ALEXANDER, E.J. SHADE, J.D. MATHESON, T.E. BOYD, D.L. COCHRAN, E.J. WHEELWRIGHT "Recovery of Silver from CEPOD Anolyte Solutions" Final Report -PNL - 10164 UC 721, Septembre 1994.

Le procédé de séparation d'argent par précipitation présente deux inconvénients, à savoir l'utilisation de quantités importantes de réducteurs et d'agents anti-nitreux, souvent indésirables et difficilement dégradables, pénalisant la gestion ultérieure des effluents, et la nécessité de procéder à une séparation solide/liquide.

Le procédé d'électrodéposition tel qu'il est mis en oeuvre dans le document de WHEELWRIGHT déjà cité ci-dessus présente l'inconvénient majeur d'utiliser un appareillage avec compartiment séparé à forte chute ohmique, tandis qu'une resolubilisation éventuelle n'est ni décrite, ni envisagée.

Les procédés décrits dans les documents US-A-4 226 685 et EP-A-0 449 735 qui mettent en oeuvre des appareils d'électrolyse à compartiment unique et qui n'abordent pas la problématique spécifique du traitement des solutions nitriques, présentent l'inconvénient majeur de comporter une étape de resolubilisation éventuelle séparée dans l'espace et dans le temps. Cette étape est réalisée de manière différée dans une installation indépendante de l'appareil d'électrolyse.

Un tel désavantage est encore plus préjudiciable dans le cas du traitement de solutions contenant des éléments radioactifs.

Le document JP-A-05 188 187 décrit, selon l'abrégé la récupération de métaux à partir d'une solution nitrique de dissolution issue par exemple de la dissolution d'un combustible nucléaire usé. Le procédé décrit dans ce document met en oeuvre une électrolyse à potentiel contrôlé sans addition de composés anti-nitreux.

En conséquence, l'invention a pour but entre autres, de remédier aux inconvénients des procédés de l'art antérieur.

Ces buts et d'autres encore, sont atteints, conformément à l'invention par un procédé électrolytique de récupération sélective et de recyclage de l'argent à partir d'une solution nitrique initiale le contenant sous forme d'Ag(I), comprenant des étapes successives d'électrodéposition de l'argent Ag(0), puis de resolubilisation, de l'argent Ag(O) déposé pour donner une solution finale d'Ag(I), dans lequel ladite étape d'électrodéposition est réalisée à intensité imposée, lesdites étapes successives d'électrodéposition de l'argent, et de resolubilisation de l'argent déposé sont réalisées dans le même appareil, et un agent anti-nitreux est ajouté pendant l'étape d'électrodéposition.

Le procédé selon l'invention permet donc de s'affranchir de deux des inconvénients essentiels liés aux procédés de l'art antérieur décrits plus haut.

D'une part, il ne met pas en oeuvre d'agents tels que des agents réducteurs difficilement dégradables. Tous les produits utilisés sont en effet des produits facilement dégradables ne posant pas de problèmes lors du traitement ultérieur des effluents, ils permettent en particulier d'éviter de procéder à une séparation solide/liquide extrêmement difficile à réaliser notamment en milieu actif.

D'autre part, le fait d'intégrer les étapes de récupération de l'argent Ag(O) et de resolubilisation dans le même appareil conduisent à une grande simplification du procédé, à une plus grande compacité des installations, à une réduction du nombre des canalisations et autres dispositifs d'acheminement des fluides et des solides etc.

Tous ces avantages du présent procédé sont particulièrement importants en milieu actif.

Le gain de place va de pair avec un gain de temps, puisque le traitement de resolubilisation et de recyclage n'est pas réalisé de manière différée sur un site spécialement conçu.

En conséquence, le procédé de l'invention est beaucoup plus économique que les procédés de l'art antérieur. Par ailleurs, le fait de réaliser l'étape d'électrodéposition à intensité imposée, permet par rapport aux procédés opérant à potentiel contrôlé de limiter les temps d'électrodéposition. C'est en effet l'intensité qui gouverne la quantité d'argent déposé.

L'invention va maintenant être décrite plus en détail, par référence aux dessins annexés dans lesquels :

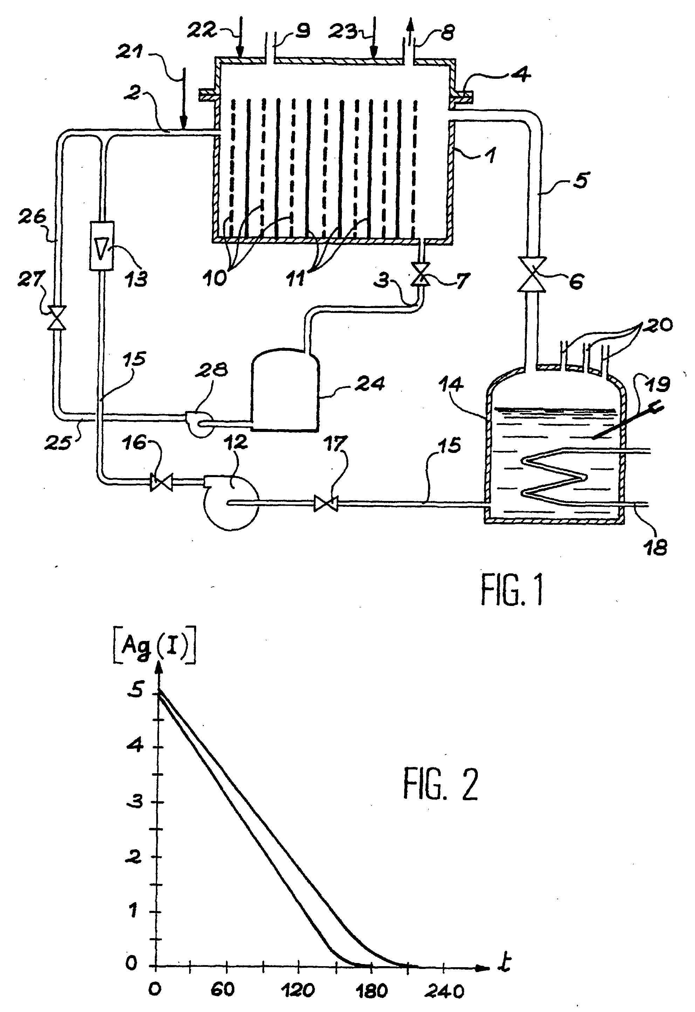

- la figure 1 est un schéma de principe de l'installation de "désargentification" pour la mise en oeuvre du procédé selon l'invention, comprenant en particulier un électrolyseur sans compartiment séparé et constitué d'une enceinte unique.
- La figure 2 est un graphique illustrant la cinétique d'électrodéposition de l'argent dans un électrolyseur sans compartiment séparé. En abscisse est porté le temps (exprimé en minutes) et en ordonnées est portée la concentration en Ag(I) (exprimée en mol/l x 10⁻²). La courbe inférieure illustre l'électrodéposition d'argent à partir d'une solution d'Ag(I) ne renfermant pas de cations gênants, tandis que la courbe supérieure illustre l'électrodéposition d'argent à partir d'une solution renfermant en outre des cations gênants (Fe, Ni, Cr et Mn).

Le procédé selon l'invention de récupération et de recyclage de l'argent permet donc de récupérer sélectivement l'argent à partir d'une solution nitrique le contenant.

Cette solution peut être toute solution notamment aqueuse contenant l'argent sous forme Ag(I) (Ag^{⊕}) ; la concentration en argent (Ag I) de la solution traitée est de préférence de 0,01 à 0,1 mol/l.

La solution est une solution nitrique, c'est-à-dire qu'elle contient de l'acide nitrique HNO₃, de préférence à une concentration de 0,1 à 6 mol/l ; par exemple 5 mol/l.

La solution traitée peut comprendre, outre les ions Ag(I) un ou plusieurs autres cations généralement dénommés "cations gênants", ces cations sont généralement des cations de métaux appartenant, par exemple, au groupe formé par Fe, Ni, Cr, Mn, Mg et Zn et ils sont généralement présents à une concentration pour chacun d'entre eux inférieure ou égale à 0,1 mol/l par exemple inférieure ou égale à 0,05 mol/l.

Selon une de ses caractéristiques particulièrement avantageuses, le procédé selon l'invention, permet non seulement le dépôt quantitatif avec un rendement d'électrodéposition proche de 100 % de l'argent à partir d'une solution contenant ces cations gênants, mais aussi un dépôt sélectif, c'est-à-dire que l'argent Ag(0) déposé est d'une pureté élevée : à savoir généralement plus de 90 %.

La solution nitrique peut être en particulier une solution nitrique issue du traitement des déchets plutonifères par le procédé PUREX. La solution nitrique contenant l'argent sous forme Ag(I) peut donc en outre comprendre un ou plusieurs élément(s) radioactif(s) appartenant par exemple au groupe formé de U, Pu, Am, Np, Cm et des Lanthanides.

La concentration de chacun des éléments radioactifs présents étant généralement inférieure ou égale à 100 mg/l. Pour U, la concentration est de préférence inférieure ou égale à 50 mg/l et pour l'Am et le Pu elle est de préférence inférieure ou égale à 1,25 mg/l.

Le procédé selon l'invention permet également le dépôt sélectif de l'argent à partir d'une solution contenant ces éléments radioactifs. Cette sélectivité est démontrée par le fait que l'argent Ag(0) déposé à la cathode est extrêmement pur, et que, de ce fait, la resolubilisation ultérieure de l'argent métal en Ag(I) lors de la deuxième étape du procédé donne une solution qui contient une fraction de l'activité alpha généralement inférieure à 1 % de l'activité initiale, soit un facteur de décontamination FD supérieur à 100.

En conséquence, l'argent métal resolubilisé en milieu nitrique pourra être aisément recyclé dans l'amont du procédé de lixiviation à l'Ag(II) électrogénéré.

D'autres composés tels que des matières en suspension peuvent également être présents dans la solution nitrique à une concentration généralement inférieure à 100 mg/l.

Selon l'invention, les étapes d'électrodéposition (récupération) de l'argent et de resolubilisation (recyclage) de l'argent déposé ont lieu dans le même appareil.

Cet appareil est de préférence un électrolyseur sans compartiment séparé et à enceinte unique.

Un tel appareil a une chute ohmique fortement réduite et donne de forts rendements en courant, même en présence de cations gênants, tandis que l'électrodéposition de l'argent est quasiment quantitative et que le rendement global en argent à l'issue des deux étapes est également très élevé.

Un tel électrolyseur est par exemple du type décrit dans le document EP-A-0 449 735 et est constitué, comme cela est indiqué sur la figure 1 d'une cuve (1), généralement de forme parallélépipédique fabriquée par exemple en PVC, en polyéthylène, en polypropylène ou en tout autre matériau inerte vis-à-vis des solutions à traiter et des réactifs mis en oeuvre et du processus d'électrolyse. La cuve peut se présenter sous la forme de deux demi-cuves inférieure et supérieure, la demi-cuve supérieure formant couvercle amovible et la demi-cuve inférieure formant la cuve proprement dite, ces deux demi-cuves étant rendues solidaires l'une de l'autre par tout moyen adéquat de fixation ou d'attachement : charnière, bride (4), etc.

Cette cuve est munie, à l'une de ses extrémités, d'un dispositif ou canalisation d'alimentation (2), et éventuellement d'un trop-plein de sécurité et à l'autre de ses extrémités, d'un orifice et d'une canalisation de sortie ou de vidange (3), ainsi que d'un orifice et d'une canalisation de recirculation (5), ces canalisations étant munies par exemple de moyens d'obturation et/ou de contrôle du débit tels que des vannes (6) (7).

Dans la canalisation (2) est également prévu un piquage (21) peu avant l'électrolyseur, pour l'introduction éventuelle d'une solution d'urée.

La cuve comprend également dans sa partie supérieure une bride (8) à laquelle est raccordée une canalisation pour l'évacuation des effluents gazeux qui sont dirigés par exemple vers une colonne de lavage.

Des piquages (22,23) sont en outre prévus dans la partie supérieure de la cuve, et sont reliés par exemple à une alimentation en gaz vecteur (22) tel que de l'air ou un gaz neutre et à une alimentation en eau (23).

Un certain nombre d'autres piquages (9) (dont un seul est ici représenté) sont également prévus dans la cuve afin de permettre le passage de capteurs, et/ou de câbles reliés à des dispositifs de mesure ou à des électrodes assurant le suivi de la réaction.

Par exemple, l'électrolyseur peut être muni entre autres d'un capteur explosimètre placé dans la canalisation d'évacuation des effluents gazeux et permettant de suivre le dégagement d'hydrogène.

L'électrolyseur ou cellule d'électrolyse est équipé de une ou de plusieurs électrode(s) de polarité opposée.

Les électrodes de polarités opposées peuvent être disposées de manière alternée comme c'est le cas de l'appareil décrit dans le document EP-A-0 449 735.

La ou les électrode(s) correspondant à l'une des polarités sont de préférence une ou des électrode(s) de grande surface déployée, dite(s) électrode(s) volumique(s), de préférence amovible(s) et démontable(s), comme cela est décrit dans le brevet européen déjà cité ci-dessus. Par grande surface déployée, on entend généralement une surface de quelques m², de préférence de 1 à 10 m². La ou les électrode(s) volumique(s) constitue(nt) de préférence la ou les cathodes de l'électrolyseur mis en oeuvre dans le procédé selon l'invention et est (sont) constituée(s) par exemple d'un empilement d'un grand nombre (par exemple 10 à 25) de grilles en métal, par exemple en acier inoxydable.

De ce fait, la ou les électrode(s) volumique(s), par exemple la ou les cathode(s) présente(nt) une grande surface déployée permettant des densités de courant comprises entre 1 à 10 mA/cm², à des intensités de 100 à 500 A. Les grilles constituant la ou les cathode(s) peuvent être placées dans des cadres assurant leur rigidité, ces cadres étant réalisés dans un matériau inerte vis-à-vis de l'électrolyse, et vis-à-vis des solutions à traiter et des réactifs mis en oeuvre, par exemple ces cadres peuvent être réalisés en poly(chlorure de vinyle), en polyéthylène ou en polypropylène.

La ou les cathode(s) peuvent être également recouvertes d'un tissu filtrant à forte porosité, afin de limiter la formation de dendrites susceptibles de provoquer des courts-circuits francs entre anodes et cathodes.

L'électrolyseur comportera de préférence n cathodes et n+1 anodes, ainsi à titre d'exemple, l'électrolyseur représenté sur la figure 1 comporte 7 anodes (10) entre lesquelles sont intercalées des cathodes volumiques (11).

Les anodes utilisées sont réalisées par exemple en platine ou bien encore en titane ruthénié ou irridié, c'est-à-dire en titane recouvert d'un dépôt électrocatalytique d'oxyde d'irridium et/ou de ruthénium.

Le (s) cadre(s) de la ou des cathodes ainsi que les anodes sont munis de moyens coopérant avec des moyens prévus dans la cuve de l'électrolyseur et permettant de les positionner et de les fixer le cas échéant de manière amovible et démontable dans la cuve de l'électrolyseur. Ces moyens peuvent être d'une part des ergots et d'autre part des rainures coopérant avec lesdits ergots et prévues dans la cuve de l'électrolyseur, par exemple des rainures creusées à même la paroi de cette cuve.

Le procédé selon l'invention comprend tout d'abord une étape d'électrodéposition de l'argent dans laquelle les paramètres opératoires régissant l'électrolyse sont de préférence parfaitement contrôlés à l'intérieur de plages de valeurs spécifiques, ce qui assure un fort rendement en courant et un dépôt quasi-quantitatif de l'argent avec une grande sélectivité.

Dans cette étape d'électrodéposition réalisée selon l'invention à intensité imposée, on impose à la cathode une faible densité de courant, de préférence inférieure ou égale à 10 mA/cm², par exemple de 2 à 6 mA/cm², et on ajoute un composé anti-nitreux tel que de l'urée qui empêche toute réaction de solubilisation autocatalytique de l'argent Ag(0) déposé par HNO₃.

En effet, lorsqu'il n'y a plus assez d'argent en solution, l'intensité fournie est supérieure à ce qui est nécessaire pour réduire l'argent et donc on réduit aussi l'acide nitrique, ce qui explique que l'on doive recourir à la mise en oeuvre de composés anti-nitreux. C'est là également une des caractéristiques du procédé selon l'invention lors de l'étape d'électrodéposition réalisée à intensité imposée, que de nécessiter la mise en oeuvre de composés anti-nitreux. L'addition de tels agents ou composés anti-nitreux n'est pas indiquée dans les procédés où l'on réalise une électrodéposition à potentiel controlé. Le composé anti-nitreux est choisi généralement parmi l'urée et l'eau oxygénée.

L'urée doit être généralement ajoutée initialement par exemple à une concentration de 0,1 mol/l, mais en fonction des temps nécessaires aux opérations un apport peut être nécéssaire en continu à partir de solution aqueuse de concentration 8 mol/l. La quantité d'urée à rajouter est fonction de la composition des solutions à traiter. Pour des solutions d'acide nitrique telles que définies précédemment la quantité d'urée doit généralement être inférieure à 6.10⁻⁶ mol/s/A. L'urée est un réactif facilement dégradable sans influence préjudiciable sur la suite du procédé.

Cependant, du fait que la mise en oeuvre de l'urée pourrait, outre la formation de N₂, de CO₂ et d'eau conduire aussi à la formation de nitrate d'ammonium, on utilisera de préférence de l'eau oxygénée comme composé anti-nitreux à une concentration qui peut être facilement déterminée par l'homme du métier.

L'étape d'électrodéposition de l'argent peut être réalisée en mode discontinu "batch", mais est de préférence réalisée avec une recirculation en continu de la solution nitrique à désargentifier.

Comme cela est représenté sur la figure 1, la cuve de l'électrolyseur (1) est alimentée en solution nitrique à traiter par l'intermédiaire d'une pompe à circulation (12) à un débit régulé mesuré par un rotamètre (13) à partir d'une cuve de stockage ou cuve d'alimentation de capacité suffisante (14) par exemple de 1 m³ qui renferme la solution nitrique à "désargentifier".

La canalisation d'alimentation (encore appelée canalisation de recirculation) (15) est également munie de moyens d'obturations tels que des vannes (16, 17).

Une solution d'urée peut généralement être introduite dans le circuit de préférence, par l'intermédiaire du piquage (21) prévu dans la canalisation (2) en amont de l'électrolyseur.

La cuve (14) est munie de moyens permettant de réguler la température de la solution nitrique à traiter. Sur la figure, ces moyens sont représentés sous la forme d'un serpentin (18) plongeant dans la solution et parcouru par un fluide caloporteur.

Les moyens de régulation de la température de la solution comprennent également un capteur de température (19).

La cuve de stockage comprend également un certain nombre de piquages (20) pour, par exemple l'introduction de réactifs ou autres. La solution nitrique traitée, "désargentifiée", ayant traversé l'électrolyseur quitte cet électrolyseur par l'orifice de recirculation et s'écoule par une canalisation de recirculation (5) munie d'une vanne (6) et regagne la cuve de stockage (14), d'où elle est de nouveau renvoyée vers l'électrolyseur via la deuxième partie de la canalisation de recirculation (15) et la canalisation (2).

L'électrolyseur est ainsi alimenté en continu à un débit constant, la solution nitrique s'appauvrissant à chaque passage en Ag(I) tandis que l'argent métallique Ag(0) se dépose sur la ou les cathode(s).

On poursuit la recirculation, tout en suivant la cinétique d'électrodéposition de l'argent, par exemple au moyen d'une potentiométrie à double électrode de platine.

La fin de l'électrodéposition, qui correspond par exemple à une concentration en Ag(I) inférieure à 100 mg/l, est mise en évidence par un saut de potentiel.

On met alors un terme à la recirculation. La durée de l'opération d'électrodéposition est variable, elle est dépendante de la quantité d'argent à récupérer et de l'intensité imposée, et correspond à des rendements faradiques de 50 à 100%.

Selon l'invention, et du fait en particulier des conditions opératoires parfaitement maîtrisées et contrôlées par l'intermédiaire des paramètres mentionnés ci-dessus, le rendement de récupération de l'argent est quasiment quantitatif, à savoir supérieur à 99 %.

Conformément au procédé selon l'invention et à l'issue de l'étape d'électrodéposition, on procède alors à la deuxième étape du procédé selon l'invention qui est une étape de resolubilisation de l'argent déposé sous forme de Ag métal lors de l'étape précédente d'électrodéposition.

Selon une caractéristique fondamentale de l'invention, cette étape de resolubilisation a lieu dans le même appareil que celui où s'est déroulée l'étape d'électrodéposition, qui est de préférence un électrolyseur sans compartiment séparé constitué d'une enceinte unique, par exemple du type déjà décrit ci-dessus.

L'étape de resolubilisation comprend généralement encore deux étapes, d'une part une première étape de vidange de l'appareil où s'est déroulée l'électrodéposition, d'autre part une seconde étape de resolubilisation proprement dite.

La vidange est de préférence réalisée aussitôt après la fin de l'étape d'électrodéposition et comprend un lavage/rinçage avec un fluide de rinçage de préférence avec de l'eau, de préférence de l'eau déminéralisée ou de l'acide de normalité inférieure à 0,1 N.

Selon une caractéristique préférée de l'invention, il a été montré qu'il était préférable d'injecter le fluide de rinçage tel que de l'eau dans l'appareil tel que l'électrolyseur ou enceinte d'électrolyse par effet piston, et à un débit qui est de préférence supérieur à 300 l/h pour un appareil d'un volume d'environ 100 litres.

Dans de telles conditions, les pertes d'argent consécutives à sa resolubilisation par HNO₃ sont très réduites, d'autant mieux que la dilution par l'acide nitrique est rapide.

D'autre part et selon une autre caractéristique préférée du procédé selon l'invention, la vidange est réalisée de préférence sous tension, à savoir par exemple 12 volts.

L'étape de resolubilisation proprement dite de l'argent Ag(0) déposé sur la ou les cathode(s) est réalisée en introduisant de l'acide nitrique frais concentré à une concentration par exemple supérieure ou égale à 4 mol/l de préférence de 6 mol/l, de préférence à une intensité nulle.

En opérant de la sorte, et en particulier en observant les conditions opératoires de la deuxième étape décrites plus haut, on obtient un rendement global de l'ensemble du procédé en argent très élevé, généralement supérieur à 96 % et même à 99 %.

En se reportant à la figure 1, les modes opératoires de vidange et de resolubilisation peuvent être décrits schématiquement de la manière suivante :

La vidange est effectuée simplement par l'intermédaire de la canalisation (3) en ouvrant la vanne (7).

Le rinçage peut être réalisé par injection d'eau à partir de la canalisation (23).

L'acide nitrique frais, par exemple à 6 N ou 6 mol/l, nécessaire à la resolubilisation-redissolution est généralement contenu dans une cuve (24), par exemple d'une capacité de 300 litres, et on le fait circuler à l'aide d'une pompe 28 par l'intermédiaire des canalisations (25), (26) munies d'une vanne (27) vers l'éiectrolyseur et à partir de ce dernier.

L'argent métal récupéré à l'issue de la première étape très sélective d'électrodéposition est d'une grande pureté, de ce fait la solution nitrique d'Ag(I) finale obtenue après la resolubilisation de l'Ag(0) contient très peu de cations gênants et/ou d'éléments radioactifs.

La solution obtenue contient ainsi une fraction de l'activité alpha généralement inférieure à 1 % (Facteur de décontamination FD ≥ 100) de l'activité initiale et peut être facilement recyclée par exemple en amont du procédé.

Les exemples suivants, donnés à titre illustratif et nullement limitatif montrent la mise en oeuvre du procédé selon l'invention.

### EXEMPLE 1 :

Dans cet exemple, on a réalisé à échelle réduite l'électrodéposition d'Ag(0) conformément à la première étape du procédé selon l'invention.

L'appareillage utilisé comprend un électrolyseur à enceinte unique et sans compartiment séparé, de forme parallélépipédique relié à une boucle de recirculation de manière analogue à ce qui est représenté sur la figure 1.

Cet électrolyseur de capacité utile 1,5 l est équipé de deux anodes en titane recouvert d'un dépôt électrocatalytique d'oxyde d'irridium et/ou de ruthénium qui ont chacune une surface déployée de 110 cm², et d'une cathode en acier inoxydable 316L. Chacune des cathodes est constituée d'un empilement de 25 grilles de dimensions 95X115 mm avec un fil de 0,8 mm lisse et uni ; chacune de ces cathodes présente une surface déployée de 2700 cm².

Les caractéristiques de la solution nitrique traitée étaient les suivantes :
- concentration en HNO₃ : 4 mol/l
- concentration en Ag(I) : 0,05 mol/l
- concentration en cations "gênants" : 0
- concentration en urée ajoutée initialement : 0,1 mol/l
- volume de solution nitrique traitée : 10 litres.

On a appliqué à la cathode une intensité de courant de 6 A, soit une densité de courant de cathode de 2 mA/cm² conforme à l'invention.

On a observé le dépôt quantitatif d'argent (Ag(0)) à partir de la solution nitrique décrite ci-dessus.

Le rendement en courant était de 78 %.

Sur la figure 2, la courbe inférieure illustre la cinétique d'électrodéposition de l'argent en l'absence de cations gênants.

On constate qu'au bout de 180 minutes environ, la totalité de l'argent (I) se trouvant dans la solution traitée s'est déposée sur la cathode.

### EXEMPLE 2 :

Dans cet exemple, on a réalisé de nouveau à échelle réduite, l'électrodéposition d'Ag(0) conformément à la première étape du procédé selon l'invention.

On a utilisé le même appareillage avec le même électrolyseur que dans l'exemple 1.

Les caractéristiques de la solution nitrique traitée étaient les suivantes :
- concentration en HNO₃ : 4 mol/l
- concentration en Ag(I) : 0,05 mol/l
- concentration en cations gênants :
   Fe(III) : 2,50 10⁻³ mol/l
   Mn(III) : 0,08 10⁻³ mol/l
   Ni(II) : 0,32 10⁻³ mol/l
   Cr(III) : 0,75 10⁻³ mol/l
   concentration totale en cations gênants : 3,65 10⁻³ mol/l.
- concentration en urée ajoutée initialement : 0,1 mol/l.
- volume de solution nitrique traitée : 10 litres.

On a appliqué à la cathode une intensité de courant de 6 A, soit une densité de courant de cathode de 2 mA/cm² conforme à l'invention.

On a observé, de même que dans l'exemple I, le dépôt quantitatif et sélectif d'argent (Ag(0)) à partir de la solution nitrique décrite ci-dessus et renfermant des cations gênants.

Le rendement en courant était de 65 %.

Sur la figure 2, la courbe supérieure illustre la cinétique d'électrodéposition de l'argent en présence de cations gênants.

On constate qu'au bout de 210 minutes environ, la totalité de l'argent(I) se trouvant dans la solution traitée s'est déposée sur la cathode.

### EXEMPLE 3

Dans cet exemple, on étudie l'influence sur l'électrodéposition de l'argent, de la présence d'éléments radioactifs présents en faible quantité dans les solutions nitriques constituées de raffinat à désargentifier.

Les éléments radioactifs sont essentiellement U, Pu et Am.

Outre ces éléments radioactifs, les solutions comprennent également les cations "gênants" Fe, Cr, Mn et Ni.

L'appareillage utilisé comprend un électrolyseur à enceinte unique et sans compartiment séparé identique à celui des Exemples 1 et 2, mais adapté aux conditions de mise en oeuvre en milieu actif, c'est-à-dire placé dans une boîte à gants.

Les caractéristiques de la solution nitrique traitée étaient les suivantes :
- concentration en HNO₃ : 4 mol/l
- concentration en Ag initiale : 5,28 10⁻² mol/l
- concentration en urée initiale : 0,242 mol/l
- concentration en cations gênants :
   Fe(III) : 2,9 10⁻³ mol/l
   Ni(II) : 3,5 10 -4 mol/l
   Cr(III) : 8 10⁻⁴ mol/l
   Mn(III) : 9 10⁻⁵ mol/l
   Concentration totale en cations gênants : 4,14 10⁻³ mol/l.
- concentration en éléments radioactifs :
   Pu : 1,5 mg/l
   U : 50 mg/l
   Am : 0,1 mg/l
   concentration totale en éléments radioactifs : 51,6 mg/l
- volume de solution nitrique traitée : 1,7 l.

On a appliqué une intensité de courant de 6A, soit une densité de courant de cathode de 2 mA/cm².

Plus de 99 % de l'argent initial a été électrodéposé en 25 minutes avec un rendement en courant de 87 %.

Ce dépôt est effectué de manière extrêmement sélective, puisque la resolubilisation d'Ag(0) en Ag(I) par HNO₃ dans une étape ultérieure contient une fraction de l'activité alpha inférieure ou égale à 1 % de l'activité initiale.

Cette activité résiduelle correspond au volume de rétention de l'électrolyseur, essentiellement au niveau de la cathode, après vidange de la solution à désargentifier et sans rinçage à l'eau de l'électrolyseur.

### EXEMPLE 4

Dans cet exemple, on réalise, cette fois à échelle semi-industrielle, la récupération d'argent par électrodéposition à partir d'une solution nitrique contenant outre Ag(I) des cations gênants ou impuretés principalement composés de Fe, Ni, Cr et Mn.

L'appareillage utilisé est conforme à celui décrit sur la figure 1, et comporte un électrolyseur et une cuve d'alimentation renfermant la solution nitrique à désargentifier.

L'électrolyseur, de forme parallélépipédique fabriqué en PVC à une capacité 100 l, et est alimenté par la solution à désargentifier, par une pompe à circulation, à un débit de 13 m³/h à partir de la cuve de stockage de 1 m³.

L'électrolyseur est, comme représenté sur la figure 1, équipé de 6 cathodes volumiques avec des grilles en acier inoxydable 316 L d'une surface de 16 m², et de 7 anodes en platine d'une surface de 0,7 m².

Les empilements de grilles constituant les cathodes sont placés dans des cadres assurant leur rigidité.

Ces cadres ainsi que les différentes anodes sont positionnés dans l'électrolyseur dans des rainures creusées à même le réacteur.

La solution nitrique traitée d'un volume de 1 m³ contenait 5 kg d'argent, et avait une concentration en HNO₃ de 4 mol/l.

Cette solution comportait d'autre part les concentrations suivantes en cations gênants :
Fe : 2,9.10⁻³ mol/l
Mn : 9.10⁻⁵ mol/l
Cr : 8.10⁻⁴ mol/l
Ni : 3,5.10⁻⁴ mol/l

On a réglé le débit de recirculation à 13 m³/h, on a appliqué une intensité de courant de 400 A, soit une densité de courant de cathode de 2,5 mA/cm² conforme à l'invention.

La température de la solution a été régulée à 22-25°C.

On a réalisé cinq essais en faisant varier chaque fois la concentration en urée dans différentes plages : respectivement 0,07 à 0,13 mol/l ; 0,02 à 0,07 mol/l ; 0,02 à 0,03 mol/l ; 0,04 à 0,06 mol/l et enfin 0,06 à 0,11 mol/l, les autres paramètres opératoires restant inchangés.

L'alimentation en urée est réalisée en continu à un débit de 11 à 22 mol/h d'urée par addition d'une solution aqueuse d'urée à 8 mol/l.

Pour les cinq essais réalisés, trois types de suivi en ligne ont été utilisés :
- le dégagement d'hydrogène dans le circuit des effluents gazeux par capteur explosimètre,
- le suivi tout ou rien de [Ag(I)] par potentiométrie à double électrode de platine,
- le suivi spectrophotométrique d'HNO₂ à 370 nm.

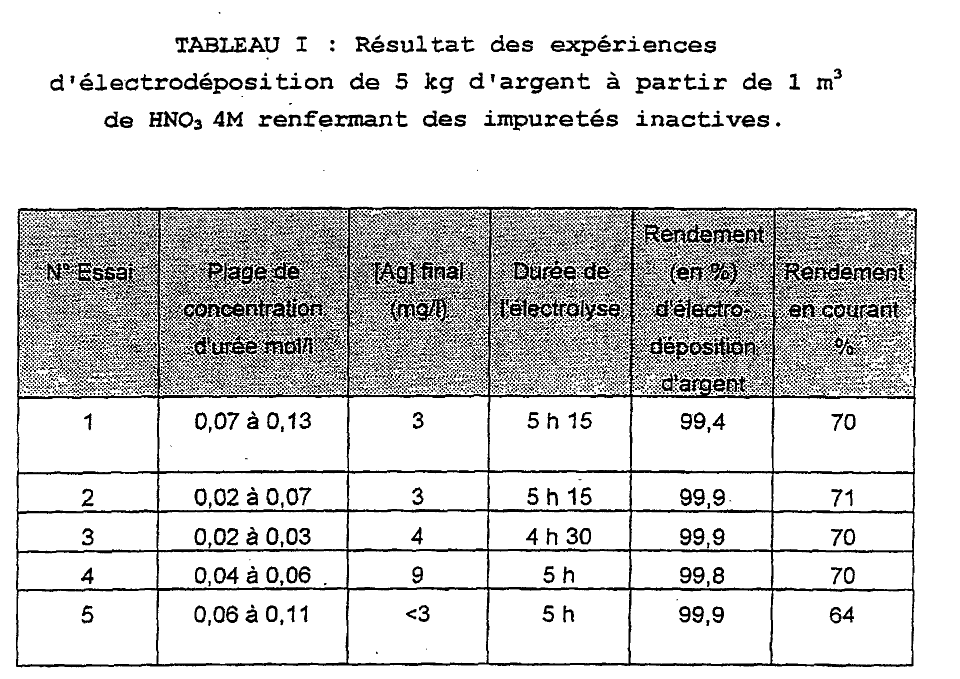

Le Tableau montre que les 5 kg d'argent sont électrodéposés avec des rendements en argent supérieurs à 99 %, en une durée comprise entre 4 h 30 et 5 h 15.

Les rendements en courant sont de 64 à 70 %.

Le suivi du dégagement d'hydrogène a permis de démontrer la quasi-absence d'électrogénération d'hydrogène lors de l'électrodéposition d'argent, notamment en fin d'électrolyse où H₂ < 1 % ppv.

La potentiométrie à double électrode de Pt avec une intensité imposée de i = 600 µA permet de mettre en évidence la fin d'électrodéposition d'argent, pour un seuil d'Ag(I)<100 mg/l.

On observe en effet un saut de potentiel de 200 mV.

Pendant toute la durée de l'électrolyse, l'addition d'urée à raison de 3,10.10⁻³ mol/s, soit 7,5 10⁻⁶ mol/s/A, ne permet pas de déceler, (par mesure de D.O.), l'apparition de concentration significative d'HNO₂.

## Revendications

1. Procédé électrolytique de récupération sélective et de recyclage de l'argent à partir d'une solution nitrique le contenant sous forme d'Ag(I), ce procédé comprenant des étapes successives d'électrodéposition de l'argent sous forme d'argent métal Ag(0) puis de resolubilisation de l'argent Ag(0) déposé, pour donner une solution finale d'Ag(I) dans lequel ladite étape d'électrodéposition est réalisée à intensité imposée, lesdites étapes successives d'électrodéposition de l'argent et de resolubilisation de l'argent déposé sont réalisées dans le même appareil, et un agent anti-nitreux est ajouté pendant l'étape d'électrodéposition.

2. Procédé selon la revendication 1, **caractérisé en ce que** ledit appareil est un électrolyseur à enceinte unique, sans compartiment séparé.

3. Procédé selon la revendication 1, **caractérisé en ce que** la solution initiale contient l'argent Ag(I) à une concentration de 0,01 à 0,1 mol/l.

4. Procédé selon la revendication 1, **caractérisé en ce que** la solution initiale contient l'acide nitrique à une concentration de 0,1 à 6 mol/l.

5. Procédé selon la revendication 1, **caractérisé en ce que** la solution initiale, outre l'argent, comprend un ou plusieurs cation(s) de métaux appartenant au groupe formé de Fe, Ni, Cr, Mn, Mg et Zn.

6. Procédé selon la revendication 5, **caractérisé en ce que** la concentration de chacun des cations présents est inférieure ou égale à 0,1 mol/l.

7. Procédé selon la revendication 1, **caractérisé en ce que** la solution initiale comprend un ou plusieurs élément(s) radioactif(s) appartenant au groupe formé de U, Pu, Am, Np, Cm et des lanthanides.

8. Procédé selon la revendication 7, **caractérisé en ce que** la concentration de chacun des éléments radioactifs présent est inférieure ou égale à 100 mg/l.

9. Procédé selon la revendication 1, **caractérisé en ce que** ladite étape d'électrodéposition de l'argent est réalisée à une densité de courant de cathode inférieure ou égale à 10 mA/cm².

10. Procédé selon la revendication 1 **caractérisé en ce que** ledit composé anti-nitreux est choisi parmi l'urée et l'eau oxygénée.

11. Procédé selon la revendication 10, **caractérisé en ce que** l'urée est ajoutée en continu à raison d'environ 6.10⁻⁶ mol/s/A.

12. Procédé selon la revendication 2, **caractérisé en ce que** l'électrolyseur comporte une ou plusieurs cathode(s) de grande surface déployée.

13. Procédé selon la revendication 1, **caractérisé en ce que** ladite étape de resolubilisation comprend une première étape de vidange dudit appareil et une seconde étape de resolubilisation proprement dite de l'Ag(0) déposé sur la ou les cathode(s).

14. Procédé selon la revendication 13, **caractérisé en ce que** ladite étape de vidange est réalisée sous tension.

15. Procédé selon la revendication 13, **caractérisé en ce que** ladite étape de vidange comprend le rinçage dudit appareil par un fluide de rinçage.

16. Procédé selon la revendication 15, **caractérisé en ce que** ledit fluide de rinçage est injecté par effet piston à un débit supérieur à 300 l/h.

17. Procédé selon la revendication 13, **caractérisé en ce que** ladite étape de resolubilisation de l'argent Ag(0) déposé sur la ou les cathode(s) est réalisée par introduction d'acide nitrique frais concentré à une concentration supérieure ou égale à 4 mol/l.

18. Procédé selon la revendication 13, **caractérisé en ce que** ladite étape de resolubilisation proprement dite est réalisée à courant nul.

## Claims

1. Electrolytic method for the selective recovery and recycling of silver from a nitric acid solution containing it in the form of Ag(I), this method comprising successive steps of electro-deposition of the silver in the form of silver metal Ag(O) and then the redissolution of the deposited silver Ag(O), to give a final solution of Ag(I) in which said step of electro-deposition is carried out at a proscribed current, said successive steps of electro-deposition of the silver and redissolution of the deposited silver being carried out in the same apparatus and an anti-nitrous agent is added during the electro-deposition step.

2. Method according to claim 1, **characterized in that** said apparatus is an electrolytic unit with a single enclosure, without a separate compartment.

3. Method according to claim 1, **characterized in that** the initial solution contains silver Ag(I) at a concentration of from 0.01 to 0.1 mol/l.

4. Method according to claim 1, **characterized in that** the initial solution contains nitric acid at a concentration of from 0.1 to 6 mol/l.

5. Method according to claim 1, **characterized in that** the initial solution contains, apart from the silver, one or more metal cations belonging to the group made up of Fe, Ni, Cr, Mn, Mg and Zn.

6. Method according to claim 5, **characterized in that** the concentration of each of the cations present is less than or equal to 0.1 mol/l.

7. Method according to claim 1, **characterized in that** the initial solution includes one or more radioactive elements belonging to the group made up of U, Pu, Am, Np, Cm and the lanthanides.

8. Method according to claim 7, **characterized in that** the concentration of each of the radioactive elements present is less than or equal to 100 mg/l.

9. Method according to claim 1, **characterized in that** said step of electro-deposition of the silver is carried out at a cathode current density less than or equal to 10 mA/cm².

10. Method according to claim 1, **characterized in that** said anti-nitrous compound is chosen from among urea and oxygenated water.

11. Method according to claim 10, **characterized in that** the urea is added continuously at the rate of about 6 x 10⁻⁶ mol/s/A.

12. Method according to claim 2, **characterized in that** the electrolytic unit comprises one or more cathodes with a large deployed surface area.

13. Method according to claim 1, **characterized in that** said step of redissolution includes a first step of emptying said apparatus and a second step of redissolving the Ag(O) deposited on the cathode or cathodes.

14. Method according to claim 13, **characterized in that** said step of emptying is carried out with a voltage applied.

15. Method according to claim 13, **characterized in that** said step of emptying comprises rinsing said apparatus with a rinsing fluid.

16. Method according to claim 15, **characterized in that** said rinsing fluid is injected by a piston at a flow rate greater than 300 l/h.

17. Method according to claim 13, **characterized in that** said step of redissolving the silver Ag(O) deposited on the cathode or cathodes is carried out by introducing fresh nitric acid at a concentration greater than or equal to 4 mol/l.

18. Method according to claim 13, **characterized in that** said redissolving step itself is carried out with zero current.

## Patentansprüche

1. Elektrolytisches Verfahren zur selektiven Rückgewinnung und Recyclisierung des Silbers aus einer es in Form von Ag(I) enthaltenden Salpetersäurelösung, wobei dieses Verfahren die folgenden aufeinanderfolgenden Stufen umfasst:
elektrolytische Abscheidung des Silbers in Form von metallischem Silber Ag(0), dann Wiederauflösung des abgeschiedenen Silbers Ag(0) zur Bildung einer fertigen Lösung von Ag(I), bei dem die genannte Stufe der elektrolytischen Abscheidung bei einer angelegten Stromstärke durchgeführt wird, die genannten aufeinanderfolgenden Stufen der elektrolytischen Abscheidung von Silber und der Wiederauflösung des abgeschiedenen Silbers in der gleichen Vorrichtung durchgeführt werden und während der Stufe der elektrolytischen Abscheidung ein Anti-Salpetersäuremittel zugegeben wird.

2. Verfahren nach Anspruch 1, **dadurch gekennzeichnet, dass** die Vorrichtung ein Elektrolysator mit einem einzigen Raum ohne abgetrenntes Abteil ist.

3. Verfahren nach Anspruch 1, **dadurch gekennzeichnet, dass** die anfängliche Lösung Silber Ag(I) in einer Konzentration von 0,01 bis 0,1 mol/l enthält.

4. Verfahren nach Anspruch 1, **dadurch gekennzeichnet, dass** die anfängliche Lösung Salpetersäure in einer Konzentration von 0,1 bis 6 mol/l enthält.

5. Verfahren nach Anspruch 1, **dadurch gekennzeichnet, dass** die anfängliche Lösung außer Silber ein oder mehr Kationen von Metallen enthält, die zur Gruppe Fe, Ni, Cr, Mn, Mg und Zn gehören.

6. Verfahren nach Anspruch 5, **dadurch gekennzeichnet, dass** die Konzentration jedes der vorhandenen Kationen ≤ 0,1 mol/l beträgt.

7. Verfahren nach Anspruch 1, **dadurch gekennzeichnet, dass** die anfängliche Lösung ein oder mehr radioaktive Elemente enthält, die zur Gruppe U, Pu, Am, Np, Cm und den Lanthaniden gehört.

8. Verfahren nach Anspruch 7, **dadurch gekennzeichnet, dass** die Konzentration jedes der vorhandenen radioaktiven Elemente ≤ 100 mg/l beträgt.

9. Verfahren nach Anspruch 1, **dadurch gekennzeichnet, dass** die Stufe der elektrolytischen Abscheidung von Silber bei einer Kathoden-Stromdichte von ≤ 10 mA/cm² durchgeführt wird.

10. Verfahren nach Anspruch 1, **dadurch gekennzeichnet, dass** die genannte Anti-Salpetersäure-Verbindung ausgewählt wird aus der Gruppe Harnstoff und Wasserstoffperoxid.

11. Verfahren nach Anspruch 10, **dadurch gekennzeichnet, dass** der Harnstoff kontinuierlich in einer Menge von etwa 6.10⁻⁶ mol/s/A zugegeben wird.

12. Verfahren nach Anspruch 2, **dadurch gekennzeichnet, dass** der Elektrolysator ein oder mehr Kathoden mit einer entwickelten großen Oberfläche umfasst.

13. Verfahren nach Anspruch 1, **dadurch gekennzeichnet, dass** die Stufe der Wiederauflösung umfasst eine erste Stufe der Entleerung der Vorrichtung und eine zweite Stufe der Wiederauflösung des Silbers Ag(0), das auf der (den) Kathode(n) abgeschieden worden ist.

14. Verfahren nach Anspruch 13, **dadurch gekennzeichnet, dass** die Stufe der Entleerung unter Spannung durchgeführt wird.

15. Verfahren nach Anspruch 13, **dadurch gekennzeichnet, dass** die Stufe der Entleerung das Spülen der Vorrichtung mit einer Spülflüssigkeit umfasst.

16. Verfahren nach Anspruch 15, **dadurch gekennzeichnet, dass** die Spülflüssigkeit mittels eines Kolbens mit einer Durchflussmenge von > 300 l/h injiziert wird.

17. Verfahren nach Anspruch 13, **dadurch gekennzeichnet, dass** die Stufe der Wiederauflösung des auf der (den) Kathode(n) abgeschiedenen Silbers Ag(0) durch Einführung von frischer konzentrierter Salpetersäure mit einer Konzentration von ≥ 4 mol/l durchgeführt wird.

18. Verfahren nach Anspruch 13, **dadurch gekennzeichnet, dass** die Stufe der Wiederauflösung bei einem Strom Null durchgeführt wird.
